# EUROPÄISCHE PATENTSCHRIFT

(11) **EP 2 185 486 B1**
(45) Veröffentlichungstag und Bekanntmachung des Hinweises auf die Patenterteilung: **25.10.2017**
(21) Anmeldenummer: 08786695.0
(22) Anmeldetag: 31.07.2008
(51) Int. Cl.: C04B 37/00, B32B 18/00

(54) **SCHICHTSTOFF**
LAMINATE
MATÉRIAU STRATIFIÉ

(30) Priorität: 08.08.2007 DE 102007037433
(43) Veröffentlichungstag der Anmeldung: 19.05.2010
(73) Patentinhaber: SGL Carbon SE, 65201 Wiesbaden (DE)
(72) Erfinder: CHRIST, Martin, 86159 Augsburg (DE); ÖTTINGER, Oswin, 86405 Meitingen (DE); BACHER, Jürgen, 86637 Wertingen (DE); LANGER, Werner, 86450 Altenmünster (DE); MECHEN, Sylvia, 86405 Meitingen (DE); HUDLER, Bastian, 86641 Rain (DE)
(86) Internationale Anmeldenummer: PCT/EP2008/060070
(87) Internationale Veröffentlichungsnummer: WO 2009/019193

(56) Entgegenhaltungen:
- EP-A- 0 616 884
- EP-A- 0 820 077
- CA-C- 1 314 927
- DE-B3-102004 041 043
- JP-A- 58 012 267
- US-A- 4 755 429

## Beschreibung

Die Erfindung betrifft einen Schichtstoff, der aus mindestens einer Lage eines kompressiblen, graphitischen Materials und mindestens einer weiteren Lage eines kompressiblen, graphitischen Materials oder einer Lage eines keramischen Materials besteht und bei dem eine unlösbare Verbindung zwischen der Keramik und dem Graphit vorliegt sowie ein Verfahren zur Herstellung eines solchen Schichtstoffes.

Schichtstoffe aus Metallplatten oder -Blechen und aus Platten oder Folien hergestellt durch Verdichten von wurmförmigem oder expandiertem Graphit sind bekannt (US 3,404,061; DE-OS 25 18 351; US 4,422,894; Firmenprospekt TM SIGRAFLEX der SGL Technologies GmbH). Sie werden vor allem für Flachdichtungen, als Ofeneinbauten, Strahlungsschilde, Abscheidungsplatten in Elektrofiltern und für korrosionsbeständige Auskleidungen verwendet.

Anordnung und Abfolge der einzelnen Lagen in derartigen Schichtstoffen sind weitgehend frei wählbar und richten sich nach dem vorgesehenen Anwendungszweck. In den meisten Fällen ist der Graphit ein- oder beidseitig auf die Metalllage aufgebracht.

Nach der Art der Haftung zwischen Graphit- und Metalllage können zwei Arten derartiger Schichtstoffe unterschieden werden. Im ersten Fall ist die Haftung mechanischer Art. Der metallische Teil hat Oberflächenstrukturen, die beim Verpressen des Graphits mit dem Metallteil entweder in den Graphit eindringen oder in die der Graphit durch Fließprozesse eindringt.

Beispiele hierfür sind Spießbleche, Bleche mit nicht entgrateten Bohrungen, Drahtgewebe, Sintermetalle bzw. Metalloberflächen mit porigen, rauhen oder verletzten Oberflächen.

Im zweiten Fall werden die Metall- und die Graphitoberflächen mittels organischer oder anorganischer Kleber kraftschlüssig miteinander verbunden. Dieses Verfahren wird bevorzugt bei Vorliegen sehr glatter Metalloberflächen und/oder dann verwendet, wenn die Oberflächen nicht mit mechanisch wirkenden Verankerungselementen versehen werden können.

Alle Verbindungen des ersten und des zweiten Typs haben Nachteile, die die Verwendbarkeit der Schichtkörper einschränken oder die Ursache für Beschädigungen der Schichtkörper sind.

Für die Ausbildung einer mechanisch wirkenden Verbindung sind bei der Fertigung des Schichtstoffs bereits relativ hohe Flächenpressungen erforderlich. Demgemäß können z. B. aus derartigem Material hergestellte Dichtungen für Dichtungsaufgaben, bei denen nur niedrige Spannkräfte auf die Dichtungsflächen aufgegeben werden dürfen, nicht verwendet werden. Desweiteren führt das Eingreifen oder Einbringen von Zacken oder Erhebungen der Metallverstärkung in den Graphit oder das Gleiten von Graphitmaterial in Vertiefungen der Metallverstärkung zu partiellen Inhomogenitäten und Schwächungen der Graphitauflage. Bei Dichtungen führt dies zu Inhomogenitäten in der Verteilung der Flächenpressung und damit der Dichtwirkung, bei Anwendungen als Coating gegenüber aggressiven Medien zu einer Verringerung der wirksamen Schichtstärke und bei Anwendungen unter hohen Temperaturen zu ungleichmäßiger Erwärmung bzw. Wärmeabführung und infolgedessen zu Verspannungen und Verwerfungen mit der Folge von partiellen Ablösungen. Ablösungen sind bei diesem Verbindungstyp insbesondere bei der Manipulation von Schichtstoffteilen häufig nicht zu vermeiden. Dies ist besonders bei dünnen und damit biegbaren Schichtstoffen oder bei schmalen Teilen aus solchen Schichtstoffen der Fall. Derartige Vorkommnisse führen häufig zur Unbrauchbarkeit des Teils oder beim Auftreten im laufenden Betrieb zu Betriebsstörungen.

Die Verwendung von die Verbindung zwischen verschiedenen Lagen eines Schichtstoffes herstellenden Klebern hat andere Nachteile. Kleber, der bisher für die Herstellung von Schichtstoffen der bekannten Art, werden in Schichtstärken von mindestens mehreren Mikrometern (µm), typischerweise von mehr als 50 µm aufgetragen. Das bedeutet, dass sich zwischen den verschiedenen Lagen eines Schichtstoffes eine Klebstofflage befindet, deren Masse zusätzlich zur Klebung bestimmte Wirkungen hervorruft, die beachtet werden müssen. Schichtstoffe dieser Art können nur bis höchstens zur Zersetzungstemperatur des Klebstoffs eingesetzt werden. Andernfalls sind die Gebrauchsfähigkeit verhindernde oder herabsetzende Schäden wie Ablösungen einzelner Lagen die Folge. Desweiteren ist das Austreten von Zersetzungsprodukten des Klebers in die Apparaturen oder die Umgebung häufig nicht tolerierbar. Selbst wenn das Schichtstoffteil eingespannt ist und deshalb Ablösungen der Lagen nicht zu befürchten sind, wie dies bei Flachdichtungen der Fall ist, führt die Zersetzung des Klebers wegen der mit der Zersetzung einhergehenden Volumenverminderung zu einer Reduzierung der Dichtwirkung durch Senkung der Schraubenvorspannung. Ein anderer Schädigungsmechanismus setzt bei verklebten Schichtstoffen unter Druckspannung ein, wenn Kleberschichten durch thermische oder chemische Einwirkung erweichen. Die unter Druckspannung stehenden Graphitschichten beginnen dann bereits bei relativ niedrigen Flächenpressungen seitlich abzugleiten, was im Extremfall zum Zerreißen des Schichtstoffs führt. Im Fall einer verklebten Flachdichtung wird z.B. die Dichtwirkung wegen der mit den Gleitvorgängen verbundenen Verringerung der Schraubenvorspannung herabgesetzt. Nachspannen der Schrauben kann diesen Mangel nicht ausgleichen, weil dann die Fließprozesse weitergehen. Schließlich müssen bei Anwendungen wie z. B. bei Filterplatten in Elektrofiltern, bei denen auch eine gute elektrische Leitfähigkeit senkrecht zur Oberfläche des Schichtstoffs gefordert ist, teure Leitkleber verwendet werden. Ablösungen im Klebersystem, die durch chemische Einwirkungen oder durch Schwingungen verursacht werden können, führen hier mindestens zu einer drastischen Verringerung des Wirkungsgrades. Auch bei der Herstellung von Schichtstoffen, die zur Ableitung, Übertragung oder Verteilung von Wärme genutzt werden, ist häufig die Verwendung von teuren, thermisch leitfähigen Klebern notwendig, da die geringe Wärmeleitfähigkeit von herkömmlichen Klebern die Wärmeleitfähigkeit des verklebten Schichtstoffs in senkrechter Richtung zu den Fügeebenen deutlich verringert. Dokument EP0616884A2 offenbart ein Verfahren zu Herstellung eines Schichtstoffes aus mindestens einer Lage eines Metalls und mindestens einer Lage Graphit, bei dem eine unlösbare Verbindung zwischen dem Metall und dem Graphit vorliegt.

Die Erfindung hat sich die Aufgabe gestellt, einen Schichtstoff, der aus mindestens einer Lage eines kompressiblen, graphitischen Materials und mindestens einer weiteren Lage eines kompressiblen, graphitischen oder einer Lage eines keramischen Materials besteht und bei dem eine unlösbare Verbindung zwischen den Lagen vorliegt, anzugeben. Die Erfindung hat sich weiterhin die Aufgabe gestellt, ein Verfahren zur Herstellung eines solchen Schichtstoffes zu schaffen. Insbesondere soll der Schichtstoff einer sein, der die beschriebenen Nachteile von Schichtstoffen nach dem Stand der Technik nicht hat und bei dem die Verbindung zwischen Lagen sowohl unter thermischen als auch unter mechanischen Beanspruchungen, wie Biegung oder Druckspannungen, unlösbar ist, d. h. dass die Festigkeit der Verbindung über die Erstreckung der Verbindungsflächen des Schichtstoffs größer als die Eigenfestigkeit der einzelnen Lagen ist.

Die Aufgabe wird durch die kennzeichnenden Merkmale des Patentanspruch 1 gelöst. Vorteilhafte Ausgestaltungen sind in den weiteren Ansprüchen dargelegt.

Das zum Verbinden verwendete, kompressible Graphitmaterial wird in an sich bekannter Weise durch thermisches Expandieren von Graphiteinlagerungsverbindungen zu sogenanntem expandierten Graphit und nachfolgendes Verdichten des expandierten Graphits zu flexiblen Folien oder zu Platten hergestellt (US 3,404,061; DE 26 08 866; US 4,091,083). Diese können auch mit Harzen imprägniert sein. Weiterhin können auch Graphitschäume, Carbonfaser-Filze, Carbonfaser-Gewirke oder Carbonfaser-Gelege eingesetzt werden.

Im weiteren wird für diese Gruppe von Materialien der Begriff "kompressibler Graphit" verwendet.

Die mit dem "kompressiblen Graphit" zu verbindende Schicht kann aus der Gruppe der "kompressiblen Graphite" oder aus der Gruppe bestehend aus oxidischen Keramiken, karbidischen Keramiken, extrudierten, rüttelverdichteten oder isostatisch gepressten Graphitmaterialien ausgewählt werden. Im weiteren wird für diese Gruppe von Materialien der Begriff "zweite Schicht" verwendet. Bei der Lösung der Aufgabe wurde nach die haftungsvermittelnden Substanzen zwischen "kompressiblem Graphit" und der "zweiten Schicht" gesucht, die gleichmäßig und extrem dünn auf die Oberflächen der beiden Materialien aufbringbar sind. Hydro- und oleophobierende Substanzen lassen sich in bekannter Weise in sehr dünnen Überzügen auf Oberflächen, speziell auf textile Oberflächen aber wie die Versuche zeigten, auch auf den "kompressiblen Graphit" und die "zweite Schicht" aufbringen. Überraschenderweise wurde nun gefunden, dass diese Substanzen auch als ausgezeichnete Haftvermittler zwischen dem "kompressiblen Graphit" und der "zweiten Schicht" wirken, wenn die zu verbindenden Oberflächen eine gewisse Zeit lang bei erhöhter Temperatur zusammengepresst werden. Diese haftvermittelnde Wirkung wird
auch dann noch entfaltet, wenn diese Substanzen in so geringer Menge aufgetragen werden, dass wenigstens eine der zu verbindenden Oberflächen gerade damit bedeckt werden kann.

Es ist wesentlich für die Erfindung, dass die jeweilige haftvermittelnde Substanz in möglichst geringer Menge, d. h. in im Nanometer-Bereich (nm) liegenden Stärken aufgetragen wird. Die verwendeten erfindungsgemäßen Substanzen wirken offensichtlich selektiv haftvermittelnd auf die Materialpaarung "kompressibler Graphit" und "zweite Schicht". Andere Stoffe als "kompressibler Graphit" wie Keramiken, Gummi, Kunststoffe, Holz ließen sich damit nicht fest miteinander oder mit einer "zweiten Schicht" verbinden. Die Haftvermittlung folgt hier also nicht den bei üblichen Klebstoffen bekannten Verbindungsmechanismen. Dies folgt auch aus der Tatsache, dass bei mehreren der hergestellten Schichtstoffe die Verbindungsfestigkeit zwischen "kompressibler Graphit" und "zweiter Schicht" auch oberhalb der Zersetzungstemperatur der Haftvermittler bestehen bleibt. Nachteile der oben beschriebenen Art treten nicht mehr auf. Der Schichtstoff kann bis zur Eigenfestigkeit der Schichten (Lagen) druckbelastet werden.

Die erfindungsgemäß verwendbaren Haftvermittler sind grenzflächenaktive Substanzen aus der Gruppe der siliciumorganischen Verbindungen, vorzugsweise der Silicone, der perfluorierten Verbindungen und der Metallseifen, die an sich wohlbekannt sind und als Hydrophobierungs-, Antischaum- oder Weichgriffmittel in der Technik, z. B. für die Ausrüstung von Textilien verwendet werden (P. Hardt, Silicon-Textilhilfsmittel, Textilveredelung 19 (1984), S. 143 bis 146; Ullmanns Encyklopädie der technischen Chemie, 3. Auflage 1966, Bd. 17, S. 203 bis 206). Von den Siliconen werden insbesondere Polysiloxane aus der Gruppe Dimethyl-polysiloxane, Methyl-hydrogen-polysiloxane, (Methyl-polyalkylenoxid)dimethyl-polysiloxane, Amino-modifizierte-methyl-polysiloxane, alpha (α), omega (ω)-Dihydroxy-dimethyl-polysiloxane, α, ω -Divinyl-dimethyl-polysiloxane, α, ω-Dihydroxy- (methyl-alkylamino)-dimethyl-polysiloxane verwendet. Aus der Gruppe der grenzflächenaktiven perfluorierten Verbindungen haben sich besonders Perfluorcarbonsäuren und perfluorierte Verbindungen der allgemeinen Formel F₃C-(CF₂)n-R mit R = Polyurethan, Polyacrylat, Polymethacrylat und n = 6 - 12 als günstig erwiesen. Keiner der genannten Stoffe darf Klebstoffcharakter haben, da sonst die Wirkungsweise der Erfindung nicht mehr gewährleistet wäre und die im Vorstehenden beschriebene Nachteile wieder wirksam werden. Die Wirkung der genannten grenzflächenaktiven Substanzen kann verbessert werden, indem in sie entweder vor ihrem Auftragen auf die Oberflächen des "kompressiblen Graphits" und/oder der "zweiten Schicht" oder nach diesem Vorgang mindestens ein hydrolysierbares Salz aus der Gruppe der Metalle, Aluminium, Zirkon, Titan, Zinn, Zink, Chrom in molekularer Form eingelagert wird. Dies geschieht entweder durch Vermischen der entsprechenden Komponenten miteinander im gewünschten Verhältnis vor dem Auftragen oder nach dem Auftragen der ersten aus einem Siloxan und/oder einer perfluorierten Verbindung und/oder einer Metallseife bestehenden Komponente auf eine oder beide der zu verbindenden Oberflächen auf die bereits aufgetragene Schicht durch ein geeignetes Auftragsverfahren. Um die notwendige feine Verteilung zu erreichen, wird hierbei häufig mit Emulsionen, Dispersionen oder Lösungen gearbeitet. Die aufgetragenen hydrolysierbaren Salze verteilen sich dann in der ersten Schicht durch Diffusion in molekularer Form. Bevorzugt werden als hydrolysierbare Salze Fettsäuresalze der genannten Metalle zugesetzt. Sie wirken außerdem vernetzend auf die grenzflächenaktiven Verbindungen und fördern deren Fixierung auf den Oberflächen, auf die sie aufgebracht wurden. Als Vernetzungshilfe kann vorteilhafterweise auch ein Epoxidamin eingesetzt werden.

Die angegebenen grenzflächenaktiven Substanzen können, unabhängig von der Stoffklasse, der sie angehören, allein oder in Mischungen untereinander angewendet werden, wobei Mischungen aus mehr als zwei der grenzflächenaktiven Substanzen zwar möglich, aber aus praktischen Gründen unüblich sind. Vorteilhaft sind z. B. Mischungen aus Methyl-hydrogen-polysiloxan und (Methylpolyalkylenoxid)-dimethyl-polysiloxan, Mischungen aus Methyl-hydrogen-polysiloxan und α, ω-Dihydroxydimethyl-polysiloxan und Mischungen aus aminomodifiziertem Methyl-polysiloxan und α, ω - Dihydroxydimethyl-polysiloxan. Als besonders vorteilhaft hat sich eine Mischung von Methyl-hydrogen-polysiloxan und Dimethyl-polysiloxan im ungefähren Gewichtsverhältnis von 1 : 1 erwiesen, die bevorzugt in Form einer wässrigen Emulsion verarbeitet wird.

Falls es Schwierigkeiten bereitet, die grenzflächenaktive Substanz oder eine Mischung derartiger Substanzen gleichmäßig auf die Oberflächen des "kompressiblen Graphits"
und der "zweiten Schicht" aufzubringen, empfiehlt sich der Zusatz eines Benetzungshilfsmittels wie z. B. eines Alkylsulfonats oder einer Aufbereitung aus einem Fettalkohol und einem Etheralkohol zur aufzutragenden Flüssigkeit.

Welches Material als "zweite Schicht" verwendet wird, hängt vom vorgesehenen Verwendungszweck des Schichtstoffs ab. Die "zweite Schicht" kann in Form dünner Folien, Platten oder Blöcken vorliegen und die Oberflächen können plan oder wie in Rohren oder Behältern, gebogen sein. Vor ihrer Verarbeitung zum Schichtstoff müssen die zum Fügen mit dem "kompressiblen Graphit" bestimmten Oberflächen der "zweiten Schicht" gesäubert werden. Weitere Oberflächenbehandlungen sind nicht erforderlich.

Die Komponenten des Schichtstoffs können in allen möglichen Anordnungen kombiniert werden. Die "zweite Schicht", die vorzugsweise in Form von Folien oder flächigen Teilen mit Stärken von zehntel Millimetern bis wenigen Zentimetern vorliegt, kann einseitig oder beidseitig mit "kompressiblem Graphit" beschichtet werden. Es können auch Körper aus einer wechselnden Folge von "kompressiblem Graphit" und der "zweiten Schicht" hergestellt werden.

Das Auftragen der grenzflächenaktiven Substanz kann auf eine oder auf beide der zu verbindenden Oberflächen vorgenommen werden. In aller Regel wird nur eine Oberfläche der Paarung benetzt, da dadurch die Menge an verwendeter grenzflächenaktiver Substanz weiter verringert werden kann.

Beim Auftragen der grenzflächenaktiven Substanzen auf die zu verbindenden Oberflächen muss es stets das Ziel sein, möglichst wenig dieser Substanzen, diese Menge aber möglichst gleichmäßig aufzubringen. Man arbeitet deshalb bei der üblichen Verfahrensweise nur selten mit reinen Substanzen. Diese werden in der Regel nur dann verwendet, wenn sie niedrigviskos genug sind. Üblicherweise werden Lösungen oder Emulsionen bzw. Dispersionen angewandt, wobei beim Arbeiten im größeren Maßstab wässrige Emulsionen bevorzugt werden. Durch Wahl entsprechender Verdünnungsgrade, eventuell in Verbindung mit dem Zusatz geringer Mengen an Benetzungshilfsmitteln, können so z. B. durch Aufstreichen, mit Hilfe von Auftragsrollen, durch Sprühen jeweils in Verbindung mit nachfolgendem Abstreifen oder anderen an sich bekannte Verfahren äußerst dünne Auflagen an grenzflächenwirksamen Substanzen aufgebracht werden. Die Schichtstärke beträgt nicht mehr als 1000 nm. Sie ist nicht geringer als 10 nm. Bevorzugt wird mit Schichtstärken von 100 bis 500 nm gearbeitet. Es ist nicht notwendig, dass zusammenhängende Filme aus grenzflächenaktiven Substanzen erzeugt werden. Eine gleichmäßig verteilte dichte Auflage feinster Tröpfchen erfüllt auch den erfindungsgemäßen Zweck. Ein Abstreifen überschüssiger Flüssigkeit nach dem ersten Auftragsvorgang empfiehlt sich aber auch hier.

Die Beschaffenheit der "kompressiblen Graphit"-Lage richtet sich nach dem für den Schichtstoff vorgesehenem Verwendungszweck. Im allgemeinen werden Lagen mit Stärken zwischen 0,1 bis 40 mm, vorzugsweise von 0,2 bis 2 mm verwendet. Die Rohdichte der aufzubringenden " kompressiblen Graphit"-Lage liegt üblicherweise im Bereich von 0,01 bis 1,9 g/cm³, vorzugsweise von 0,5 bis 1,8 g/cm³. Es ist allerdings auch möglich, in einer die "zweite Schicht" umgebenden, passenden Form expandierten Graphit auf die zuvor mit Adhäsionsvermittler versehenen Oberfläche der "zweiten Schicht" aufzugeben (Rohdichte ca. 0,002 g/cm³) und diesen expandierten Graphit dann in dieser Form zu der gewünschten "kompressiblen Graphit"-Lage zu verdichten. Auf diese Weise können sehr dünne "kompressible Graphit"-Lagen aufgebracht werden. Gegebenenfalls kann auf eine so erzeugte "kompressible Graphit"-Lage noch eine weitere "kompressible Graphit"-Lage, z. B. in Folien- oder Plattenform aufgepresst werden, die sich dann fest mit der darunter liegenden Lage verbindet, wenn diese zuvor nicht zu hoch verdichtet wurde.

Die auf die "zweite Schicht" vor dem Verpressen aufgebrachten "kompressiblen Graphit"-Lagen können bereits die Rohdichte haben, die für sie im fertigen Schichtstoff vorgesehen ist. Der beim Zusammenpressen der Lagen aus "kompressiblen Graphit" und der "zweiten Schicht", zur Herstellung des Schichtstoffs aufgewendeten Pressdruck darf dann nicht den zum Erzielen der gegebenen Rohdichte der "kompressiblen Graphit"-Lage erforderlichen Verdichtungsdruck übersteigen. Es können aber auch zunächst "kompressiblen Graphit"-Lagen mit einer niedrigeren Rohdichte als der Endrohdichte im fertig verpressten Schichtstoff aufgebracht werden. Die vorgesehene Endrohdichte wird dann erst beim Zusammenpressen der Komponenten des Schichtstoffs erzeugt.

Nach dem Zusammenfügen der den Schichtstoff bildenden Komponenten wird die angestrebte unlösbare Verbindung zwischen dem "kompressiblen Graphit" und der "zweiten Schicht" durch Zusammenpressen hergestellt. Das Zusammenpressen kann mit Hilfe jeder der bekannten und dafür geeigneten Pressvorrichtungen geschehen. Vorzugsweise werden jedoch Gesenk- oder Etagenpressen, die heizbar sein sollten, verwendet.

Bei der Ausbildung der unlösbaren Verbindung wirken die Verfahrensparameter Pressdruck, Temperatur und Zeit zusammen. Die gewünschte Verbindungsfestigkeit wird z. B. erreicht, wenn bei vergleichsweise niedrigen Temperaturen von ca. 20 bis 50°C sehr lange Zeit, d. h. in der Größenordnung von Tagen unter Einwirkung vergleichsweise hoher Drücke zusammengepresst wird. Durch eine Erhöhung der Presstemperatur kann die erforderliche Presszeit indessen stark gesenkt werden. Hohe Pressdrücke bewirken ebenfalls eine Verkürzung der Presszeit. Für ein wirtschaftliches Arbeiten werden Anpressdrücke von 0,1 bis 200 MPa, vorzugsweise von 3 bis 10 MPa unter Anwendung von Temperaturen von 20 bis 400°C, vorzugsweise von 120 bis 200°C angewendet. Beim Arbeiten innerhalb des letztgenannten Parameterbereichs werden bei entsprechender Parameteroptimierung, die der Fachmann unschwer anhand der gemachten Angaben durch entsprechende Versuche vornimmt, Presszeiten zwischen 5 Minuten und 5 Stunden, vorzugsweise von einer bis zwei Stunden benötigt. Vorteilhafter Weise kann das Verbinden der Lagen des erfindungsgemäßen Schichtstoffes auch kontinuierlich, beispielsweise mit einer Kaschieranlage oder einer Doppelbandpresse, erfolgen.

Die nach der Druckentlastung und Abkühlung auf Raumtemperatur erhaltenen Schichtstoffe weisen eine unlösbare Verbindung zwischen den jeweils benachbarten Lagen auf. Bei Versuchen, die Lagen von einander zu lösen, z.B. durch Verbiegen oder durch Anwendung des Schältests oder eines Abreißtests, tritt immer ein Reißen innerhalb der Lagen und nicht an der Verbindungszone zwischen den Lagen ein, d. h. die Festigkeit der erfindungsgemäß erzeugten Verbindung zwischen den Lagen des Schichtstoffs ist größer als die innere Festigkeit der einzelnen Lage(n).

Erfindungsgemäße Schichtstoffe sind, mechanische Verletzungen der vergleichsweise weichen Graphitoberflächen ausgenommen, handhabungsstabil. Auch bei dünnen Schichtstoffen dieses Typs treten keine Ablösungen auf, wenn sie gebogen werden. Die äußere Lage der Schichtstoffe kann oberflächenbehandelt werden, z. B. durch galvanisches Aufbringen von Metallen, durch thermische Prozesse oder Imprägnierungen mit Furanharz gemäss DE 32 44 595, ohne dass die Festigkeit der Verbindung der Lagen des Schichtstoffes leidet. Bei der Anwendung sind die erfindungsgemäßen Schichtstoffe druckfester und hitzebeständiger als herkömmliche geklebte aus "kompressibler Graphit" und einer "zweiten Schicht" bestehende Verbindungen. Sie sind außerdem stabil gegen Delaminierungen des "kompressiblen Graphit"-Teils. Außerdem wird im Gegensatz zu herkömmlich verklebten Schichtverbunden die elektrische und thermische Leitfähigkeit in senkrechter Richtung zu den Fügeebenen durch die grenzflächenaktiven Substanzen nicht abgesenkt.

Die Erfindung wird im folgenden beispielhaft durch Ausführungsbeispiele erläutert.

### Beispiel 1

Eine Graphitfolie der Dichte 1,0 g/cm³ mit den Abmessungen 200 x 200 x 1 mm³ und eine Graphitfolie der Dichte 1,8 g/cm³ mit den gleichen Abmessungen wurde durch Abwischen mit einem Tuch gereinigt. Auf die Graphitfolie mit Dichte 1,0 g/cm³ wurde einseitig mit einem Tuch dünn eine grenzflächenaktive Mischung aufgetragen. Die Mischung bestand zu gleichen Volumenanteilen aus einer wässrigen Emulsion aus Methyl-hydrogen-polysiloxan und Dimethyl-polysiloxan (Feststoffgehalt ca. 25 Gew.-%) und einer Zubereitung aus ethyliertem Fettalkohol und araliphatischem Etheralkohol. Die beschichtete Oberfläche wurde ca. 1 Minute bei 60 °C getrocknet. Anschließend wurde die beschichtete Seite der Graphitfolie mit Dichte 1,0 g/cm³ mit der gereinigten Seite der Graphitfolie mit Dichte 1,8 g/cm³ belegt und in einer Presse bei 180 °C unter einer Flächenpressung von 3 MPa für 60 Minuten verpresst. Dadurch ergab sich ein Verbund, der sich ohne Zerstörung der Graphitfolien nicht lösen ließ.

### Beispiel 2

Mehrere Graphitfolien der Dichte 1,8 g/cm³ mit den Abmessungen 150 x 150 x 1 mm³ wurden durch Abwischen mit einem Tuch beidseitig gereinigt, gewogen und einseitig dünn mit einer wässrigen Emulsion aus Methyl-hydrogen-polysiloxan und Dimethyl-polysiloxan (Feststoffgehalt ca. 25 Gew.-%) beschichtet. Anschließend wurden die beschichteten Oberflächen für 5 Minuten bei 60 °C getrocknet und erneut gewogen. Aus der Massenänderung wurde die Auftragsmenge der grenzflächenaktivierenden Beschichtung zu ca. 0,5 g/m² bestimmt. Eine weitere unbeschichtete Graphitfolie und 9 beschichtete Graphitfolien wurden so übereinander gestapelt, dass jeweils eine beschichtete Seite in Kontakt mit einer nicht beschichteten Seite stand. Das Schichtpaket wurde für 180 Minuten bei 200 °C unter 5 MPa Flächenpressung in einer Gesenkpresse verpresst. Der Verbund zeigte eine gute Haftung und ließ sich nicht ohne Zerstörung der Graphitfolien lösen.
Die thermische Leitfähigkeit des Verbunds senkrecht zu den Fügestellen betrug 6,2 W/(m·K). Die Messung der thermischen Leitfähigkeit an einem Stapel von 10 nicht verbundenen Graphitfolien der gleichen Dichte senkrecht zur Folienebene ergab den gleichen Wert. Wurden die Folien dagegen mit einem dünn aufgetragenen handelsüblichen Klebstoff verklebt (Auftragsmenge ca. 10 g/m²), betrug die Wärmeleitfähigkeit 4,7 W/(m·K).

### Beispiel 3

Eine Graphitfolie (Dichte 1,0 g/cm³) mit den Abmessungen 100 x 50 x 0,5 mm³ und eine Platte aus extrudiertem synthetischen Graphit (Dichte 1,8 g/cm³, Abmessungen 100 x 50 x 5 mm³) wurden oberflächlich gereinigt. Wie in Beispiel 1 beschrieben wurde auf eine Seite der Graphitfolie eine grenzflächenaktive Mischung aufgetragen und getrocknet. Anschließend wurde die Graphitfolie mit der beschichteten Seite auf die Platte aus extrudiertem synthetischen Graphit gelegt. Beide Materialien wurden für 90 Minuten bei 200 °C unter 3 MPa in einer Gesenkpresse verpresst. Der Verbund ließ sich nur durch Zerstörung der Graphitfolie lösen.

### Beispiel 4

Eine Graphitfolie der Dichte 1,8 g/cm³ mit den Abmessungen 200 x 200 x 0,8 mm³ und ein Stück Kohlenstofffaserfilz mit den Abmessungen 200 x 200 x 5 mm³ und wurden mit der in Beispiel 2 beschriebenen grenzflächenaktiven Substanz einseitig dünn beschichtet. Die Beschichtungen wurde bei 80 °C für 2 Minuten getrocknet. Anschließend wurden beide Materialien mit der beschichteten Seite zu einander zusammengefügt und in einer Presse bei 180 °C unter 0,5 MPa verpresst. Es ergab sich ein gut haltbarer Verbund, der nur durch Zerstörung des Kohlenstofffaserfilzes gelöst werden konnte.

### Beispiel 5

Eine Graphitfolie der Dichte 1,8 g/cm³ mit den Abmessungen 100 x 50 x 0,5 mm³ wurde gereinigt und einseitig dünn mit einer wässrigen Emulsion perfluorierter Kohlenwasserstoffe (Feststoffgehalt 30 Gew.-%) beschichtet. Nach dem Trocknen der Beschichtung bei 80 °C für 1 Minute wurde die Graphitfolie mit der beschichteten Seite auf eine kohlenstofffaserverstärkte Keramik mit einer Matrix aus Siliziumkarbid, Silizium und Kohlenstoff (Abmessungen 100 x 50 x 30 mm³) gelegt. Beide Bauteile wurden in einer Presse für 3 h bei 200 °C unter 7 MPa verpresst. Der Verbund ließ sich nur unter Zerstörung der Graphitfolie lösen.

### Beispiel 6

Nach dem in Beispiel 5 beschriebenen Verfahren wurde eine Graphitfolie (Dichte 0,7 g/cm³, Abmessungen 150 x 150 x 0,5 mm³) mit einer Aluminiumoxidkeramik (Abmessungen 150 x 150 x 5 mm³) mit einem Pressdruck von 0,5 MPa verbunden. Der Verbund ließ sich nicht ohne Zerstörung der Graphitfolien lösen.

### Beispiel 7

Mehrere Graphitfolien mit Dichte 1,0 g/cm³ und den Abmessungen 1000 x 500 x 0,5 mm³ wurden gereinigt und einseitig dünn mit der in Beispiel 1 beschriebenen grenzflächenaktiven Mischung beschichtet und getrocknet. Auf die beschichtete Seite jeder Folie wurde ein Kohlenstofffaserpapier mit den Abmessungen 1000 x 500 x 0,2 mm³ gelegt. In einer Bandkaschieranlage wurden jeweils eine Graphitfolie und ein Kohlenstofffaserpapier bei 180 °C unter einem Druck von 5 N/cm² mit einer Bandgeschwindigkeit von 2 m/min verbunden. Der Verbund konnte nur durch Zerstörung des Kohlenstofffaserpapiers gelöst werden.

### Beispiel 8

Eine Graphitfolie der Dichte 1,0 g/cm³ mit den Abmessungen 100 x 100 x 0,5 mm³ wurde gereinigt und einseitig dünn mit einer wässrigen Emulsion perfluorierter Kohlenwasserstoffe (Feststoffgehalt 30 Gew.-%) beschichtet. Nach dem Trocknen der Beschichtung bei 80 °C für 10 Minuten wurde die Graphitfolie mit der beschichteten Seite auf eine poröse Platte aus kompaktiertem expandierten Graphit (Dichte 0,3 g/cm³, Abmessungen 100 x 100 x 30 mm³) gelegt. Beide Bauteile wurden in einer Presse für 3 h bei 200 °C unter 0,5 MPa verpresst. Der Verbund ließ sich nur unter Zerstörung der porösen Platte aus kompaktiertem expandierten Graphit lösen.

### Vergleichsbeispiel 1

Im Gegensatz zu den Beispielen 1 bis 8 wurde versucht, zwei nicht komprimierbare keramische Materialien zu verbinden. Dazu wurden zwei Platten (Abmessungen: 90 x 30 x 3 mm³) aus extrudiertem Graphit (Dichte 1,8 g/cm³) gereinigt und wie in Beispiel 1 beschrieben einseitig dünn mit einer grenzflächenaktiven Substanz beschichtet und getrocknet. Anschließend wurden die Platten mit den beschichteten Seiten auf einander gelegt, in eine Presse eingebaut und bei 180 °C unter 5 MPa für 90 Minuten verpresst. Die Platten hafteten leicht an einander, der Verbund ließ sich aber mechanisch lösen, wobei die Oberflächen der Platten nicht geschädigt oder zerstört wurden.

## Patentansprüche

1. Schichtstoff, **dadurch gekennzeichnet, dass** er aus mindestens einer Lage eines kompressiblen, graphitischen Materials und mindestens einer weiteren Lage eines kompressiblen, graphitischen Materials oder einer Lage eines keramischen Materials besteht, wobei das kompressible, graphitische Material unabhängig voneinander aus der Gruppe bestehend aus kompaktiertem Graphitexpandat, Graphitschäumen, Carbonfaser-Filzen, Carbonfaser-Gewirken oder Carbonfaser-Gelegen ausgewählt wird, wobei die Festigkeit der Verbindung zwischen den Materialien über die Erstreckung der Verbindungsflächen des Schichtstoffs größer als die Eigenfestigkeit der schwächstenLage ist, und die Materialien durch eine grenzflächenaktive, haftvermittelnde Substanz aus der Gruppe der siliciumorganischen Verbindungen, Metallseifen oder perfluorierten Verbindungen, mit einer Schichtstärke von 10 - 1000 nm, verbunden sind.

2. Schichtstoff nach Anspruch 1, **dadurch gekennzeichnet, dass** das keramische Material aus der Gruppe bestehend aus oxidischen Keramiken und karbidischen Keramiken ausgewählt ist.

3. Verfahren zur Herstellung eines Schichtstoffs, **dadurch gekennzeichnet, dass** mindestens eine Lage eines kompressiblen, graphitischen Materials und mindestens einer weiteren Lage eines kompressiblen, graphitischen Materials oder eine Lage eines keramischen Materials verbunden werden, wobei das kompressible, graphitische Material unabhängig voneinander aus der Gruppe bestehend aus kompaktiertem Graphitexpandat, Graphitschäumen, Carbonfaser-Filzen, Carbonfaser-Gewirken oder Carbonfaser-Gelegen ausgewählt wird, indem mindestens eine der zu verbindenden Oberflächen mit mindestens einer grenzflächenaktiven Substanz aus der Gruppe der siliciumorganischen Verbindungen, perfluorierten Verbindungen oder Metallseifen,mit einer Schichtstärke von 10 - 1000 nm,benetzt wird, die zu verbindenden Flächen miteinander in Kontakt gebracht, bei einer Temperatur von minimal 20 und maximal 400 °C und bei einem Druck von 0.1 und 200 MPa gepresst werden.

4. Verfahren nach Anspruch 3, **dadurch gekennzeichnet, dass** mindestens eine der zu verbindenden Oberflächen mit mindestens einer grenzflächenaktiven Substanz aus der Gruppe der siliciumorganischen Verbindungen, perfluorierten Verbindungen, Seifen der Metalle Natrium, Kalium, Magnesium, Calcium benetzt wird und in diese grenzflächenaktiven Substanzen vor oder nach dem Benetzen der Oberflächen mit diesen, mindestens ein hydrolysierbares Salz aus der Gruppe der Metalle Aluminium, Zirkon, Titan, Zinn, Zink, Chrom in molekularer Form eingelagert wird, die zu verbindenden Flächen miteinander in Kontakt gebracht und bei einer Temperatur von mindestens 20 und höchstens 400 °C und einem Anpressdruck von 1 bis 200 MPa miteinander verbunden werden.

5. Verfahren nach Anspruch 4, **dadurch gekennzeichnet, dass** als grenzflächenaktive Substanz ein Polysiloxan verwendet wird.

6. Verfahren nach Anspruch 5, **dadurch gekennzeichnet, dass** als grenzflächenaktive Substanz ein Polysiloxan aus der Gruppe Dimethyl-polysiloxan, Methyl-hydrogenpolysiloxan, (Methyl-polyalkylenoxid)-dimethylpolysiloxan, Amino-modifiziertes Methyl-polysiloxan, α, ω-Dihydroxi-dimethyl-polysiloxan, α, ω -Divinyldimethyl-polysiloxan, α, ω -Dihydroxi-(methyl-alkylamino)-dimethyl-polysiloxan verwendet wird.

7. Verfahren nach Anspruch 4, **dadurch gekennzeichnet, dass** als grenzflächenaktive Substanz eine Verbindung aus der Gruppe der perfluorierten Kohlenwasserstoffe der allgemeinen Formel CF₃-(CF₂)n-R verwendet wird, wobei R ein Polyurethan, ein Polyacrylat- oder ein Polymethacrylatrest und n eine Zahl zwischen 6 und 12 ist.

8. Verfahren nach Anspruch 4 bis 7, **dadurch gekennzeichnet, dass** Mischungen der genannten grenzflächenaktiven Substanzen verwendet werden.

9. Verfahren nach Anspruch 4 bis 8, **dadurch gekennzeichnet, dass** die grenzflächenaktive Substanz bzw. Zubereitung in Form einer wässerigen Emulsion aufgetragen wird.

10. Verfahren nach Anspruch 9, **dadurch gekennzeichnet, dass** als grenzflächenaktive Substanz eine wässerige Emulsion aus einem Methyl-hydrogen-polysiloxan und einem Dimethyl-polysiloxan verwendet wird.

11. Verfahren nach Anspruch 4 bis 10, **dadurch gekennzeichnet, dass** den grenzflächenaktiven Substanzen Vernetzer aus der Gruppe Fettsäuresalze der Metalle Aluminium, Zirkonium, Titan, Zinn, Zink, Chrom und Epoxidamin zugesetzt werden.

12. Verfahren nach Anspruch 11, **dadurch gekennzeichnet, dass** die grenzflächenaktive Substanz mit einer Schichtstärke von 100 bis 500 nm aufgebracht wird.

13. Verfahren nach Anspruch 4 bis 12, **dadurch gekennzeichnet, dass** ein Anpressdruck im Bereich von 1 bis 50 MPa verwendet wird.

14. Verfahren nach Anspruch 13, **dadurch gekennzeichnet, dass** ein Anpressdruck im Bereich von 3 bis 10 MPa verwendet wird.

15. Verfahren nach Anspruch 4 bis 14, **dadurch gekennzeichnet, dass** beim Pressen der Lagen eine Temperatur im Bereich von 80 bis 300 °C verwendet wird.

16. Verfahren nach Anspruch 15, **dadurch gekennzeichnet, dass** beim Pressen der Lagen eine Temperatur im Bereich von 120 bis 200 °C verwendet wird.

17. Verfahren nach Anspruch 4 bis 16, **dadurch gekennzeichnet, dass** zum Zusammenpressen der Lagen eine Presszeit von 5 Minuten bis 5 Stunden verwendet wird.

18. Verfahren nach Anspruch 4 bis 16, **dadurch gekennzeichnet, dass** zum Zusammenpressen der Lagen eine kontinuierliche Pressanlage verwendet wird.

19. Verwendung eines Materials nach Anspruch 1 bis 3 zur Übertragung, Ableitung oder Verteilung von Wärme.

20. Verwendung eines Materials nach Anspruch 1 oder 2 zur Übertragung, Ableitung oder Verteilung von elektrischem Strom.

21. Verwendung eines Materials nach Anspruch 1 oder als Komponente in Brennstoffzellen oder Redox-Flow-Batterien.

## Claims

1. Laminate, **characterised in that** it consists of at least one layer of a compressible graphite material and at least one further layer of a compressible graphite material or one layer of a ceramic material, the compressible graphite material being selected independently of one another from the group consisting of compacted graphite expandate, graphite foams, carbon fibre felts, carbon fibre knitted fabrics or carbon fibre non-woven fabrics, the strength of the connection between the materials over the extension of the connection surfaces of the laminate being greater than the inherent strength of the weakest layer, and the materials being connected by a surface-active, adhesion-promoting substance from the group of organosilicon compounds, metal soaps or perfluorinated compounds, having a layer thickness of from 10 to 1,000 nm.

2. Laminate according to claim 1, **characterised in that** the ceramic material is selected from the group consisting of oxide ceramics and carbide ceramics.

3. Method for producing a laminate, **characterised in that** at least one layer of a compressible graphite material and at least one further layer of a compressible graphite material or one layer of a ceramic material are connected, the compressible graphite material being selected independently of one another from the group consisting of compacted graphite expandate, graphite foams, carbon fibre felts, carbon fibre knitted fabrics or carbon fibre non-woven fabrics, by at least one of the surfaces to be connected being wetted with at least one surface-active substance from the group of organosilicon compounds, perfluorinated compounds or metal soaps, having a layer thickness of from 10 to 1,000 nm, and by the surfaces to be connected being brought into contact with one another and being pressed at a temperature of at least 20°C and at most 400°C and at a pressure of from 0.1 to 200 MPa.

4. Method according to claim 3, **characterised in that** at least one of the surfaces to be connected is wetted with at least one surface-active substance from the group of organosilicon compounds, perfluorinated compounds, soaps of the metals sodium, potassium, magnesium, calcium, and at least one hydrolysable salt from the group of metals aluminium, zirconium, titanium, tin, zinc, chrome is inserted into said surface-active substances in molecular form before or after the surfaces have been wetted with said substances, and the surfaces to be connected are brought into contact with one another and are interconnected at a temperature of at least 20°C and at most 400° and at a contact pressure of from 1 to 200 MPa.

5. Method according to claim 4, **characterised in that** a polysiloxane is used as the surface-active substance.

6. Method according to claim 5, **characterised in that** a polysiloxane from the group dimethylpolysiloxane, methylhydrogenpolysiloxane, (methyl polyalkyleneoxide) dimethylpolysiloxane, amino-modified methylpolysilaxane, α,ω-dihydroxydimethylpolysiloxane, α,ω-divinyldimethylpolysiloxane, α,ω-dihydroxy(methylalkylamino)dimethylpolysiloxane is used as the surface-active substance.

7. Method according to claim 4, **characterised in that** a compound from the group of perfluorinated hydrocarbons of the general formula CF₃-(CF₂)n-R is used as the surface-active substance, where R is a polyurethane, polyacrylate or polymethacrylate functional group, and n is a number between 6 and 12.

8. Method according to claims 4 to 7, **characterised in that** mixtures of the mentioned surface-active substances are used.

9. Method according to claims 4 to 8, **characterised in that** the surface-active substance or preparation is applied in the form of an aqueous emulsion.

10. Method according to claim 9, **characterised in that** an aqueous emulsion consisting of a methylhydrogenpolysiloxane and a dimethylpolysiloxane is used as the surface-active substance.

11. Method according to claims 4 to 10, **characterised in that** cross-linking agents from the group of fatty acid salts of the metals aluminium, zirconium, titanium, tin, zinc, chrome and epoxide amine are added to the surface-active substances.

12. Method according to claim 11, **characterised in that** the surface-active substance is applied with a layer thickness of from 100 to 500 nm.

13. Method according to claims 4 to 12, **characterised in that** a contact pressure in the range of from 1 to 50 MPa is used.

14. Method according to claim 13, **characterised in that** a contact pressure in the range of from 3 to 10 MPa is used.

15. Method according to claims 4 to 14, **characterised in that** a temperature in the range of from 80°C to 300°C is used when pressing the layers

16. Method according to claim 15, **characterised in that** a temperature in the range of from 120°C to 200°C is used when pressing the layers.

17. Method according to claims 4 to 16, **characterised in that** a pressing time of from 5 minutes to 5 hours is used to compress the layers.

18. Method according to claims 4 to 16, **characterised in that** a continuous press is used to compress the layers.

19. Use of a material according to claims 1 to 3 for transmitting, dissipating or distributing heat.

20. Use of a material according to either claim 1 or claim 2 for transmitting, dissipating or distributing electrical current.

21. Use of a material according to claim 1 or as a component in fuel cells or redox flow batteries.

## Revendications

1. Plastique stratifié **caractérisé en ce qu'**il est constitué d'au moins une couche d'un matériau graphitique compressible et au moins une autre couche d'un matériau graphitique compressible ou une couche d'un matériau céramique, les matériaux graphitiques compressibles étant choisis, indépendamment l'un de l'autre, dans le groupe constitué par le graphite expansé compacté, les mousses de graphite, les feutres de fibre de carbone, les tissus de fibre de carbone ou les nappes de fibre de carbone, la résistance de la liaison entre les matériaux dans l'étendue des surfaces de liaison du plastique stratifié étant supérieure à la résistance mécanique de la couche la plus faible, et les matériaux étant reliés au moyen d'une substance tensioactive adhésive choisie dans le groupe constitué par les composés organosiliciés, les savons métalliques et les composés perfluorés, avec une épaisseur de couche allant de 10 à 1000 nm.

2. Plastique stratifié selon la revendication 1, **caractérisé en ce que** le matériau céramique est choisi dans le groupe constitué par les céramiques oxydées et les céramiques carburées.

3. Procédé de fabrication d'un plastique stratifié, **caractérisé en ce qu'**au moins une couche d'un matériau graphitique compressible et au moins une autre couche d'un matériau graphitique compressible ou une couche d'un matériau céramique sont reliées, les matériaux graphitiques compressibles étant choisis, indépendamment l'un de l'autre, dans le groupe constitué par le graphite expansé compacté, les mousses de graphite, les feutres de fibre de carbone, les tissus de fibre de carbone ou les nappes de fibre de carbone, où au moins l'une des surfaces à relier est humectée avec au moins une substance tensioactive choisie parmi le groupe des composés organosiliciés, les composés perfluorés et les savons métalliques, avec une épaisseur de couche allant de 10 à 1 000 nm, les surfaces à relier sont mises en contact l'une avec l'autre et pressées à une température de 20 °C minimum et 400 °C maximum et à une pression allant de 0,1 à 200 MPa.

4. Procédé selon la revendication 3, **caractérisé en ce qu'**au moins l'une des surfaces à relier est humectée avec au moins une substance tensioactive choisie parmi le groupe des composés organosiliciés, les composés perfluorés et les savons des métaux que sont le sodium, le kalium, le magnésium et le calcium et **en ce qu'**au moins un sel hydrolysable choisi dans le groupe constitué par les métaux que sont l'aluminium, le zirconium, le titane, l'étain, le zinc et le chrome est incorporé sous forme moléculaire à ces substances tensioactives avant ou après l'humectage des surfaces avec celles-ci, les surfaces à relier sont mises en contact l'une avec l'autre et reliées à une température de 20 °C minimum et 400 °C maximum et à une pression de contact allant de 1 à 200 MPa.

5. Procédé selon la revendication 4, **caractérisé en ce que** l'on utilise, comme substance tensioactive, un polysiloxane.

6. Procédé selon la revendication 5, **caractérisé en ce que** l'on utilise, comme substance tensioactive, un polysiloxane choisi dans le groupe constitué par le diméthylpolysiloxane, le méthyl-hydrogénopolysiloxane, le (méthyl-polyalkylènoxyd)-diméthylpolysiloxane, le méthyl-polysiloxane amino-modifié, l'α,ω-dihydroxy-diméthylpolysiloxane, l'α,ω-divinyldiméthyl-polysiloxane et l'α,ω-dihydroxy-(méthyl-alkylamino)-diméthyl-polysiloxane.

7. Procédé selon la revendication 4, **caractérisé en ce que** l'on utilise, comme substance tensioactive, un composé choisi dans le groupe constitué par les hydrocarbures perfluorés de formule générale CF₃-(CF₂)n-R, où R est un polyuréthane, un radical polyacrylate ou un radical polyméthacrylate et n est un nombre compris entre 6 et 12.

8. Procédé selon les revendications 4 à 7, **caractérisé en ce que** l'on utilise des mélanges des substances tensioactives mentionnées.

9. Procédé selon les revendications 4 à 8, **caractérisé en ce que** la substance ou préparation tensioactive est appliquée sous la forme d'une émulsion aqueuse.

10. Procédé selon la revendication 9, **caractérisé en ce que** l'on utilise, comme substance tensioactive, une émulsion aqueuse constituée d'un méthyl-hydrogéno-polysiloxane et d'un diméthylpolysiloxane.

11. Procédé selon les revendications 4 à 10, **caractérisé en ce que** l'on ajoute aux substances tensioactives, un agent réticulant choisi parmi le groupe constitué par les sels d'acides gras des métaux que sont l'aluminium, le zirconium, le titane, l'étain, le zinc, le chrome et une résine amine/époxy.

12. Procédé selon la revendication 11, **caractérisé en ce que** la substance tensioactive est appliquée avec une épaisseur de couche allant de 100 à 500 nm

13. Procédé selon les revendications 4 à 12, **caractérisé en ce que** l'on utilise une pression de contact située dans la plage allant de 1 à 50 MPa.

14. Procédé selon la revendication 13, **caractérisé en ce que** ce que l'on utilise une pression de contact située dans la plage allant de 3 à 10 MPa.

15. Procédé selon les revendications 4 à 14, **caractérisé en ce que** l'on utilise, en pressant les couches, une température située dans la plage allant de 80 à 300 °C.

16. Procédé selon la revendication 15, **caractérisé en ce que** ce que l'on utilise, en pressant les couches, une température située dans la plage allant de 120 à 200 °C.

17. Procédé selon les revendications 4 à 16, **caractérisé en ce que** l'on utilise, pour presser ensemble les couches, une durée de pressage allant de 5 minutes à 5 heures.

18. Procédé selon les revendications 4 à 16, **caractérisé en ce que** l'on utilise, pour presser ensemble les couches, un dispositif de pressage en continu.

19. Utilisation d'un matériau selon les revendications 1 à 3 pour la transmission, l'évacuation ou la diffusion de chaleur.

20. Utilisation d'un matériau selon la revendication 1 ou 2 pour la transmission, l'évacuation ou la diffusion de courant électrique.

21. Utilisation d'un matériau selon la revendication 1 ou en tant que constituant de piles à combustible ou de batteries à flux redox.
